# FASCICULE DE BREVET EUROPEEN

(11) **EP 3 138 167 B1**
(45) Date de publication et mention de la délivrance du brevet: **02.06.2021**
(21) Numéro de dépôt: 15721772.0
(22) Date de dépôt: 17.04.2015
(51) Int. Cl.: H02G 3/12, H02G 3/14, H02G 3/08, H02G 3/18

(54) **APPAREILLAGE ÉLECTRIQUE A ASSEMBLAGE SÉCURISÉ**
ELEKTRISCHE VORRICHTUNG MIT GESICHTERTEM ZUSAMMENBAU
SECURED ASSEMBLY ELECTRICAL APPARATUS

(30) Priorité: 28.04.2014 FR 1453824
(43) Date de publication de la demande: 08.03.2017
(73) Titulaire: Legrand France, 87000 Limoges (FR); Legrand SNC, 87000 Limoges (FR)
(72) Inventeur: DELMAS, Simon, 87400 La Genytouse (FR); AUMAITRE, Martin, 87100 Limoges (FR)
(74) Mandataire: Jacobacci Coralis Harle
(86) Numéro de dépôt international: PCT/FR2015/051049
(87) Numéro de publication internationale: WO 2015/166162

(56) Documents cités:
- EP-A1- 0 989 648
- EP-A1- 1 860 748
- EP-A2- 2 602 888
- DE-A1- 4 119 964
- DE-U1- 9 106 123
- US-A- 2 446 141
- US-A- 2 934 590

## Description

### DOMAINE TECHNIQUE AUQUEL SE RAPPORTE L'INVENTION

La présente invention concerne de manière générale l'installation d'un appareillage électrique dans une paroi.

Elle concerne plus particulièrement un appareillage électrique comportant :
- une partie de support qui est adaptée à être fixée à la paroi et qui comprend au moins une boîte électrique,
- un bloc électrique comprenant au moins un socle qui loge un mécanisme électrique et qui est équipé d'au moins une patte d'encliquetage adaptée à être encliquetée sur ladite partie de support, et
- une partie avant comprenant une paroi frontale et au moins une languette qui s'étend à l'arrière de ladite paroi frontale et qui est adaptée à fixer ladite paroi frontale audit bloc électrique.

L'invention trouve une application particulièrement avantageuse dans la réalisation d'un appareillage électrique présentant par exemple une fonction d'interrupteur, de va-et-vient, de variateur électrique, de prise de courant, de prise réseau (RJ45), de prise de téléphone (RJ11), de prise VDI ou équivalent (HDMI,...), de voyant, de thermostat, ou encore de détecteur (de fumée, d'inondation, de température, de mouvement ou de lumière).

### ARRIERE-PLAN TECHNOLOGIQUE

Les appareillages électriques sont majoritairement constitués d'un support d'appareillage en forme de cadre à rapporter sur la face avant ouverte d'une boîte électrique, d'un mécanisme d'appareillage (par exemple d'interrupteur ou de prise de courant) à bloquer dans l'ouverture délimitée par le support d'appareillage, et d'une plaque d'habillage à fixer sur le support d'appareillage de telle manière qu'il cache ce dernier et qu'il borde esthétiquement le mécanisme d'appareillage.

La fixation du support d'appareillage sur la boîte électrique peut se faire de diverses manières.

Typiquement, une boîte électrique comporte deux puits de vissage qui s'élèvent à partir de sa paroi de fond, le long de la face intérieure de sa paroi latérale. Le support d'appareillage comporte en correspondance, au centre de chacune de ses quatre branches, un orifice en forme de trou de serrure propre à permettre le passage d'une vis de fixation engagée dans l'un des puits de vissage de la boîte électrique.

Cette fixation par vis étant fastidieuse à mettre en œuvre, il a été développé d'autres systèmes de fixation.

On connaît ainsi du document US2934590 une prise de courant comportant un support d'appareillage qui est flanqué de deux lames-ressort repliées en U, chaque lame-ressort présentant une extrémité fixée au support et une extrémité libre adaptée à s'engager dans une fenêtre pratiquée dans la paroi latérale de la boîte électrique.

Dans ce document, la plaque d'habillage comporte deux languettes flexibles qui sont adaptées à s'engager entre les bras des lames-ressort et dont les extrémités sont repliées pour s'accrocher à ces lames-ressort.

Ce système présente un inconvénient majeur, à savoir que la fixation par encliquetage du support d'appareillage à la boîte peut être mise en défaut.

Ainsi, l'installateur peut penser, à tort, avoir correctement encliqueté le support à la boîte électrique alors que l'une des lames-ressort n'est pas engagée dans la fenêtre correspondante de la boîte. Le risque est alors que l'utilisateur, en tentant de retirer une fiche électrique hors de la prise de courant, arrache la prise de courant.

Par ailleurs, quand bien même les lames-ressort seraient bien engagées dans les fenêtres de la boîte électrique, un effort de traction exercé sur la fiche électrique risquerait de faire fléchir les lames-ressort, ce qui aboutirait encore à l'arrachement de la prise de courant hors de la boîte électrique. Les languettes de la plaque d'habillage sont en effet flexibles et ne permettraient donc pas d'empêcher la flexion des lames-ressort.

Ce système présente un autre inconvénient, à savoir qu'il ne permet en aucune manière de régler l'écart entre la plaque d'habillage et la boîte électrique. Or, après avoir bloqué la boîte électrique dans la paroi, il est courant de rapporter sur la paroi un revêtement quelconque (papier-peint, enduit, ...) qui génère une surépaisseur. Alors, cette surépaisseur empêchera l'installateur de fixer la plaque d'habillage sur le support d'appareillage.

On connaît par ailleurs du document DE9106123 un appareillage électrique comportant une boîte électrique engagée dans une paroi murale, un mécanisme de prise de courant, et une plaque d'habillage.

La boîte électrique présente dans sa paroi latérale des fenêtres situées à hauteur de cavités ménagées dans la paroi murale.

Le mécanisme de prise de courant comporte deux pattes d'encliquetage opposées qui portent, d'une part, des dents adaptées à s'encliqueter dans les fenêtres de la boîte électrique et dans les cavités de la paroi murale, et, d'autre part, des leviers.

Enfin, la plaque d'habillage présente une paroi frontale en forme de cadre, et des languettes qui s'étendent à partir du bord intérieur de cette paroi frontale, vers l'arrière, pour bloquer les leviers, de manière que les dents des pattes d'encliquetage du mécanisme de prise de courant ne puissent par ressortir des fenêtres de la boîte électrique.

La fixation de la plaque d'habillage sur la boîte électrique est ici assurée par le rebord périphérique extérieur de la plaque d'habillage, qui présente une rainure en creux adaptée à s'encliqueter sur une collerette bordant à l'avant la boîte électrique. Le document US2934590A divulgue une boîte à rapporter dans une ouverture rectangulaire pratiquée dans une paroi.

Le document EP2602888 porte sur un appareillage électrique comportant un élément d'engagement à rapporter dans un élément de réception. L'élément d'engagement comporte deux pattes en 3 parties, dont une partie qui s'étend depuis la paroi frontale, vers l'arrière, une partie recourbée vers l'avant pour former un levier de manoeuvre de la patte, et une partie recourbée vers l'avant et vers l'extérieur, qui porte des crans. L'élément de réception présente deux logements de réception de ces deux pattes.

Le document EP0989648 divulgue un appareillage électrique comportant un support, un mécanisme, et une plaque d'habillage. Le support présente une ouverture bordée de pattes d'encliquetage du mécanisme. La plaque d'habillage présente quant à elle des languettes crantées prévues pour s'accrocher, grâce à leurs crans, à l'arrière des pattes d'encliquetage du support.

Le document EP1860748 décrit une boîte électrique équipée d'un couvercle qui comprend une plaque en forme de cadre et un enjoliveur. La plaque comporte des dents d'encliquetage adaptées à s'accrocher à la boîte électrique. L'enjoliveur comporte quant à lui des languettes adaptées à s'engager entre les dents d'encliquetage et une partie de la boîte électrique.

### OBJET DE L'INVENTION

Afin de remédier aux inconvénients précités de l'état de la technique, la présente invention propose un appareillage électrique dans lequel le bloc électrique peut être solidement verrouillé dans la boîte électrique.

Plus particulièrement, on propose selon l'invention un appareillage tel que défini dans la revendication 1.

Ainsi, grâce à l'invention, le dos de la languette peut s'appuyer contre la partie rigide tandis que sa face opposée forme une butée pour la patte d'encliquetage du bloc électrique, ce qui permet de verrouiller solidement le bloc électrique dans la boîte électrique.

On comprend en outre que, grâce à l'invention, la partie avant ne peut être rapportée sur le bloc électrique que si la patte d'encliquetage est correctement accrochée à la partie de support. Sinon, la languette de la partie avant ne pourra pas s'engager entre la patte d'encliquetage et la partie rigide solidaire du socle du bloc électrique.

Par ailleurs, l'utilisation d'une seule et même languette pour non seulement fixer la partie avant au bloc électrique mais aussi pour verrouiller les pattes d'encliquetage permet d'assurer une bonne accroche de la partie avant au bloc électrique, et de réduire le nombre de languettes à l'arrière de la paroi frontale de la partie avant, ce qui facilite la fabrication de cette partie avant et réduit son coût.

Enfin, on notera que la partie avant et le bloc électrique selon l'invention sont utilisables seulement en combinaison. Il ne sera donc pas possible d'utiliser une partie avant d'un autre type avec un bloc électrique selon l'invention, ni d'utiliser une partie avant selon l'invention avec un bloc électrique d'un autre type. Ainsi, la languette forme un moyen de détrompage qui assurera à l'utilisateur que la partie avant utilisée est bien celle prévue pour être associée avec le bloc électrique, au bénéfice de la sécurité électrique de l'ensemble.

A ce stade, on peut d'ores et déjà préciser que la partie de support pourra être formée :
- de la boîte électrique, ou
- dans le cas où l'on utilise un support d'appareillage, d'un ensemble comprenant la boîte électrique et le support d'appareillage fixé sur la boîte électrique.

Le bloc électrique pourra quant à lui être formé :
- d'un module d'appareillage à engager directement dans la boîte électrique (sans support d'appareillage), ou
- dans le cas où l'on utilise un support d'appareillage, d'un mécanisme d'appareillage à engager dans le support d'appareillage.

La partie avant pourra quant à elle être formée :
- d'un enjoliveur (conformé pour conférer au bloc électrique sa fonction, cet enjoliveur présentant alors par exemple une forme de puits de réception de fiche électrique dans le cas où le bloc électrique présente une fonction de prise de courant), ou
- d'une plaque d'habillage (conçue pour border l'enjoliveur), ou encore
- d'une plaque faisant simultanément office d'enjoliveur et de plaque d'habillage.

Enfin, comme cela sera bien décrit dans l'exposé détaillé de l'invention, la partie rigide solidaire du socle du bloc électrique pourra être formée par :
- une partie du socle, ou
- une partie rapportée sur le socle (il pourra par exemple s'agir de l'enjoliveur, auquel cas la plaque avant sera formée par la plaque d'habillage).

D'autres caractéristiques avantageuses et non limitatives de l'appareillage électrique conforme à l'invention sont définies dans les revendications 2 et suivantes.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un appareillage électrique selon l'invention,
- la figure 2 est une vue en perspective arrière de la plaque d'habillage de l'appareillage électrique de la figure 1,
- les figures 3 et 4 sont des vues de détail des zones III et IV de la figure 1, représentées sous un angle légèrement différent de celui de la figure 1,
- la figure 5 est une vue schématique en coupe éclatée de l'appareillage électrique de la figure 1,
- les figures 6, 7 et 8 sont des vues de détail des zones VI, VII et VIII de la figure 5,
- la figure 9 est une vue schématique en coupe assemblée de l'appareillage électrique de la figure 1,
- la figure 10 est une vue de détail de la zone X de la figure 9,
- la figure 11 est une vue schématique en perspective éclatée d'un étrier de connexion à rapporter à l'arrière de l'appareillage électrique de la figure 1,
- la figure 12 est une vue schématique en perspective de l'étrier de connexion de la figure 11, installé dans une paroi,
- la figure 13 est une vue schématique en perspective d'une variante de réalisation de l'appareillage électrique de la figure 1, sur laquelle la plaque d'habillage n'a pas été représentée,
- la figure 14 est une vue de détail de la zone XIV de la figure 13,
- la figure 15 est une vue schématique en perspective de l'enjoliveur de l'appareillage électrique de la figure 13, et
- la figure 16 est une vue de détail d'une coupe de l'appareillage électrique de la figure 13.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

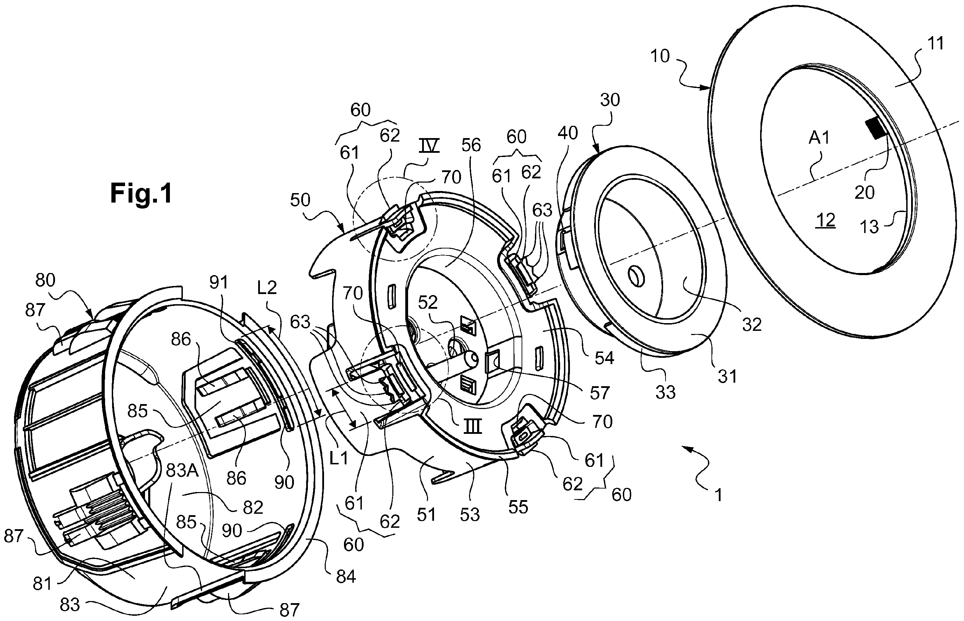

Sur la figure 1, on a représenté un appareillage électrique 1 à installer sur une paroi.

Cet appareillage électrique 1 comprend tout d'abord un bloc électrique, qui sera désigné dans la suite de cet exposé comme « module d'appareillage 50 ».

Ce module d'appareillage 50 comporte un socle 51 en matière isolante et un mécanisme électrique 52 qui est logé à l'intérieur du socle 51 et qui permet d'assurer la fonction électrique pour laquelle l'appareillage électrique 1 a été conçu.

En l'espèce, le mécanisme électrique est ici un mécanisme de prise de courant 52. Il comporte alors une broche de terre et deux alvéoles de réception de deux broches d'une fiche électrique. Il comporte également des bornes électriques qui sont connectées auxdites broche de terre et alvéoles de réception et qui sont équipées de moyens de connexion à des fils électriques issus du réseau électrique local, via un étrier de connexion 200 (qui sera décrit plus en détail dans la suite de cet exposé).

Ainsi, l'appareillage électrique 1 assure une fonction de prise de courant.

En variante, l'appareillage électrique pourrait au contraire assurer une fonction d'interrupteur, de va-et-vient, de variateur électrique, de prise réseau (RJ45), de prise de téléphone (RJ11), de voyant, de détecteur (de fumée, d'inondation, de température, de mouvement ou de lumière)...

L'appareillage électrique 1 comprend également une partie de support 80 qui a la triple fonction de loger le module d'appareillage 50, de le fixer à la paroi, et de le protéger.

Cette partie de support comprend au moins une boîte électrique 80. Dans le mode de réalisation représenté sur les figures, elle est uniquement constituée de cette boîte électrique 80.

Cette boîte électrique pourrait être du type à rapporter en saillie sur une paroi.

Telle qu'elle est représentée sur les figures, cette boîte électrique 80 est plutôt prévue pour être encastrée dans une paroi 100, ici dans une paroi du type cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

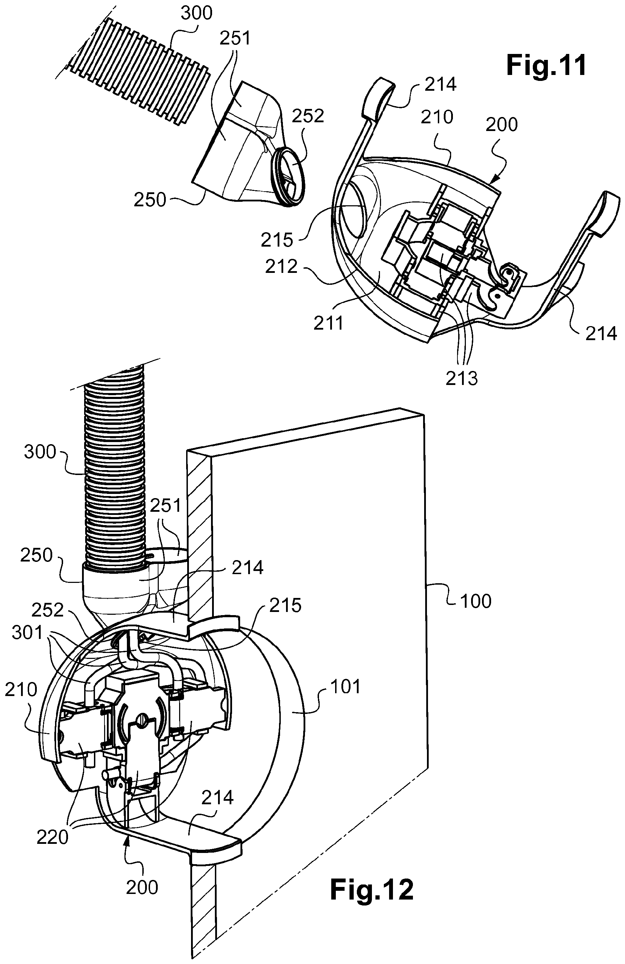

La cavité pratiquée dans cette cloison creuse est ici simplement formée par une ouverture circulaire 101 réalisée à la scie cloche dans l'un des panneaux de plâtre 100 (voir figure 12).

Dans la description, les termes « avant » et « arrière » seront alors utilisés par rapport à la direction du regard de l'installateur de la boîte électrique 80 dans cette ouverture circulaire 101. Ainsi, les termes avant et arrière désigneront respectivement le lieu tourné vers l'extérieur de la cloison creuse et le lieu tourné vers l'intérieur de la cloison creuse.

Pour sa fixation à la partie de support (ici à la boîte électrique 80), le module d'appareillage 50 comporte au moins une patte d'encliquetage 60 qui est ici adaptée à s'engager dans un logement prévu en correspondance dans la boîte électrique 80.

Enfin, l'appareillage électrique 1 comporte une partie avant 10, 30. Cette partie avant est ici réalisée en deux parties.

Elle comporte ainsi un enjoliveur 30 qui est adapté à être rapporté à l'avant du module d'appareillage 50 et dont la forme est adaptée à la fonction électrique (ici de prise de courant) du module d'appareillage 50.

Elle comporte également une plaque d'habillage 10 qui est adaptée à être rapportée à l'avant du module d'appareillage 50, autour dudit enjoliveur 30, pour cacher esthétiquement ce module d'appareillage 50.

Cet enjoliveur 30 et cette plaque d'habillage 10 comportent chacun une paroi frontale 11, 31 et au moins une languette 20, 40 qui s'étend à l'arrière de ladite paroi frontale 11, 31 et qui est adaptée à fixer la paroi frontale 11, 31 au module d'appareillage 50.

Selon une caractéristique particulièrement avantageuse de l'invention, l'une au moins de ces languettes 20 est adaptée à s'interposer entre la patte d'encliquetage 60 et une partie rigide solidaire du socle 51 du module d'appareillage 50.

On définit ici une partie rigide solidaire du socle 51 comme étant une partie qui n'est pas prévue pour fléchir ou pour bouger lors de l'utilisation courante de l'appareillage électrique 1. Il s'agit donc d'une partie sensiblement fixe.

Dans le mode de réalisation représenté sur les figures 1 à 12, cette partie solidaire appartiendra au socle 51 du module d'appareillage 50, en ce sens qu'elle viendra de formation d'une seule pièce avec ce dernier.

La languette 20 est ainsi conçue pour s'appuyer, par sa face intérieure, contre la partie rigide du socle 51 de telle manière que sa face extérieure forme une butée empêchant toute flexion vers l'intérieur de la patte d'encliquetage 60. De cette manière, tant que la languette 20 s'interpose entre la patte d'encliquetage 60 et la partie rigide du socle 51, le module d'appareillage 50 ne peut pas être retiré de la boîte électrique 20, même si un effort de traction important est exercé sur le module d'appareillage 50.

Pour assurer cette fonction, il faut au moins que la distance (au repos) entre la patte d'encliquetage 60 et la partie rigide du socle 51 soit strictement inférieure à la somme de l'épaisseur de la languette 20 et de la course nécessaire à la patte d'encliquetage 60 pour se dégager du logement prévu en correspondance dans la boîte électrique 80.

Autrement formulé, si on veut prévoir de monter la languette 20 entre la patte d'encliquetage 60 et la partie rigide du socle 51 avec du jeu, il faut que ce jeu reste inférieur à la course nécessaire à la patte d'encliquetage 60 pour se dégager du logement prévu en correspondance dans la boîte électrique 80.

Préférentiellement, cette languette 20 s'interpose sans jeu entre la patte d'encliquetage 60 et la partie rigide du socle 51 de telle sorte qu'elle se place au contact, d'un côté, de la patte d'encliquetage 60, et, de l'autre, de la partie rigide du socle 51.

Avantageusement, la languette 20 est même conçue de telle manière que, lorsque la partie avant 10, 30 est rapportée sur le module d'appareillage 50, elle force la patte d'encliquetage 60 à fléchir vers l'extérieur, c'est-à-dire vers la boîte électrique 80.

Dans le mode de réalisation représenté sur les figures, la languette 20 qui s'interpose entre la patte d'encliquetage 60 et la partie rigide du socle 51 est prévue à l'arrière de la plaque d'habillage 10 et elle vient de formation d'une seule pièce avec celle-ci.

En variante, on aurait pu envisager de la placer à l'arrière de l'enjoliveur, de telle manière qu'elle vienne de formation d'une seule pièce avec celui-ci.

Sur les figures 1 à 10, on a représenté un mode de réalisation particulier de l'appareillage électrique 1.

Comme le montre la figure 1, dans ce mode de réalisation, la boîte électrique 80 comprend un corps 81 qui présente ici une forme générale cylindrique mais qui pourrait bien entendu présenter une forme différente, notamment parallélépipédique.

Ce corps 81 comporte une paroi latérale 83 tubulaire de révolution autour d'un axe A1, qui est fermée à l'arrière par une paroi de fond 82 et qui est ouverte vers l'avant. Le corps 81 délimite ainsi un logement intérieur d'accueil du module d'appareillage 50.

Pour sa fixation dans l'ouverture circulaire 101 pratiquée dans le panneau de plâtre 100 de la cloison creuse, le corps 81 de la boîte électrique 80 comporte un trottoir extérieur 84 qui longe extérieurement le bord de l'ouverture avant de la paroi latérale 83 et qui est adapté à prendre appui contre la face avant du panneau de plâtre 100, autour de l'ouverture circulaire 101. Ainsi, ce trottoir extérieur 84 permet de bloquer le corps 81 de la boîte électrique 80 vers l'arrière.

Pour le bloquer vers l'avant, la paroi latérale 83 de la boîte électrique 80 comporte des moyens de fixation 85 qui sont adaptés à s'accrocher à l'arrière du panneau de plâtre 100.

Ces moyens de fixation 85 sont ici d'un type particulier, mais ils pourraient bien entendu être d'un autre type.

Il pourrait ainsi s'agir de griffes intervenant en position diamétralement opposée sur la boîte pour venir s'accrocher à l'arrière du panneau de plâtre, sous la commande de vis prévues à cet effet.

Ici, ces moyens de fixation comportent quatre volets 85 rectangulaires découpés dans la paroi latérale 83 du corps 81 de la boîte électrique 80, dont trois des bords sont libres et dont le quatrième bord, à savoir ici le bord avant, se raccorde au reste de la paroi latérale 83 par deux pattes formant charnière. Au repos, les quatre volets 85 sont situés dans le prolongement du reste de la paroi latérale 83 de la boîte électrique 80.

Ces quatre volets 85 comportent chacun, en saillie sur leurs faces intérieures, deux nervures 86 ayant une fonction de rampe. Ainsi, lorsque le module d'appareillage 50 est rapporté dans la boîte électrique 80, son socle 51 vient s'appuyer contre ces nervures 86, ce qui permet de forcer les volets 85 à se déployer en saillie de la paroi latérale 83 de la boîte électrique 80.

Ici, la paroi latérale 83 du corps 81 de la boîte électrique 80 porte, sur et autour de la face externe de chaque volet 85, un revêtement 87 formé par une couche de matière compressible et élastiquement déformable (typiquement une couche de SEBS, c'est-à-dire de « polystyrène-b-poly(éthylène-butylène)-b-polystyrène »). Le revêtement 87 recouvrant chaque volet 85 présente, en saillie sur de face externe, des nervures parallèles spécifiquement conçues pour s'accrocher à l'arrière du panneau de plâtre 100.

Ici, la paroi de fond 82 du corps 81 de la boîte électrique 80 comporte un opercule défonçable ou arrachable (non visible) qui permet de dégager un passage pour la connexion électrique du module d'appareillage 50.

Le corps 81 de la boîte électrique 80 est ici moulé d'une seule pièce en matériau synthétique rigide, tandis que les revêtements 87 et l'opercule défonçable ou arrachable sont surmoulés sur ce corps 81.

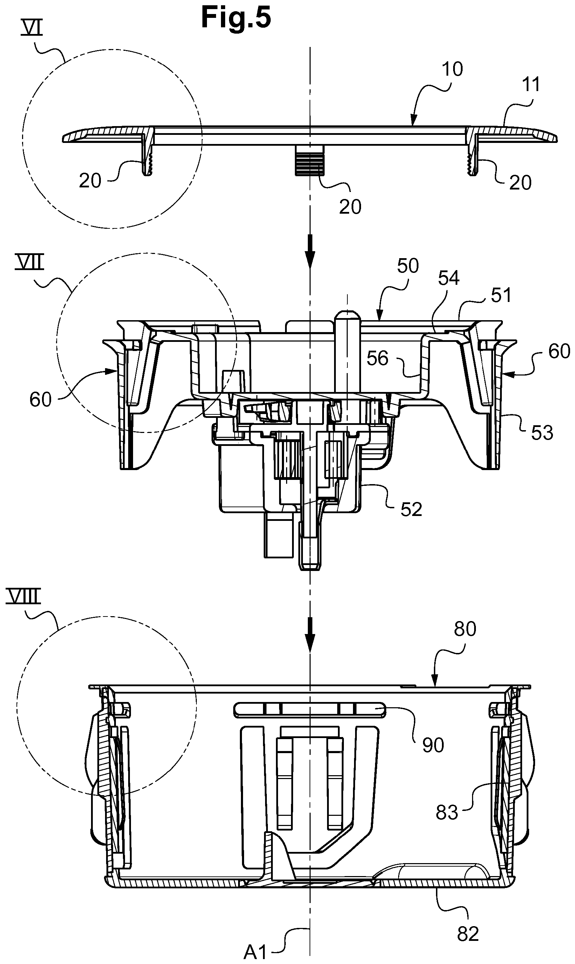

Comme le montrent les figures 1 et 5, le module d'appareillage 50 à rapporter dans cette boîte électrique 80 se présente sous la forme d'un bloc « tout en un », adapté à être rapporté directement dans la boîte électrique 80 (c'est-à-dire sans utiliser de support d'appareillage en forme de cadre).

Le socle 51 de ce module d'appareillage 50 est réalisé dans un matériau synthétique et présente une forme sensiblement identique à celle du volume intérieur délimité par le corps 81 de la boîte électrique 80. Il présente donc ici une forme sensiblement cylindrique de révolution autour de l'axe A1. La forme de ce socle 51 permet donc de profiter de l'ensemble du volume intérieur délimité par le corps 81 de la boîte électrique 80 pour loger le mécanisme de prise de courant 52.

Ce socle 51 comprend une paroi latérale 53 cylindrique de révolution autour de l'axe A1, qui est fermée à l'avant par une paroi frontale 54.

La paroi frontale 54 présente un renfoncement 56 en creux dans sa face avant, qui délimite un espace de réception d'une fiche électrique (non représentée).

Le socle 51 comporte également un trottoir extérieur 55 qui borde à l'avant la paroi latérale 53 et qui est conçu pour s'appuyer contre la face avant du trottoir extérieur 84 de la boîte électrique 80 pour retenir le module d'appareillage 50 vers l'arrière.

Chaque patte d'encliquetage 60 précitée est alors prévue pour retenir le module d'appareillage 50 vers l'avant lorsque son trottoir extérieur 55 s'appuie contre la face avant du trottoir extérieur 84 de la boîte électrique 80.

En l'espèce, le socle 51 du module d'appareillage 50 comporte ici quatre pattes d'encliquetage 60, régulièrement réparties autour du socle 51.

Ces pattes d'encliquetage 60 comportent chacune une patte flexible 61 qui est découpée dans la paroi latérale 53 du socle 51 du module d'appareillage 50 et une dent d'encliquetage 62 située sur la face extérieure de la patte flexible 61.

Chaque patte flexible 61 présente une forme de rectangle dont trois des bords sont libres et dont le quatrième bord, à savoir ici le bord arrière, se raccorde à la paroi latérale 53 du socle 51 pour former une sorte de charnière.

Chaque dent d'encliquetage 62 est alors située à proximité du bord avant de la patte flexible 61 correspondante. Chaque dent d'encliquetage 62 présente une face avant plane et orthogonale à l'axe A1, qui est adaptée à s'accrocher au bord avant 91 d'une fenêtre rectangulaire 90 prévue en correspondance dans la paroi latérale 83 du corps 81 de la boîte électrique 80, et une face arrière inclinée par rapport à l'axe A1, qui forme une rampe permettant à la patte de flexion 61 de se déformer élastiquement vers l'intérieur lorsque le module d'appareillage 50 est rapporté dans la boîte électrique 80.

En position de repos, c'est-à-dire à l'état non déformé, la dent d'encliquetage 62 portée par chaque patte flexible 61 est adaptée à s'accrocher au bord avant 91 d'une fenêtre rectangulaire 90.

Pour permettre aux pattes d'encliquetage 60 de fléchir vers l'intérieur du socle 51 du module d'appareillage 50 par rapport à leurs positions de repos, ce socle 51 délimite, du côté intérieur de chaque patte flexible 61, un dégagement 71. Chaque dégagement 71 permet alors à la patte d'encliquetage 60 correspondante de fléchir vers l'intérieur au moment du montage du module d'appareillage 50 dans la boîte électrique 80 ou lorsqu'on souhaite démonter le module d'appareillage 50 hors de la boîte électrique 80.

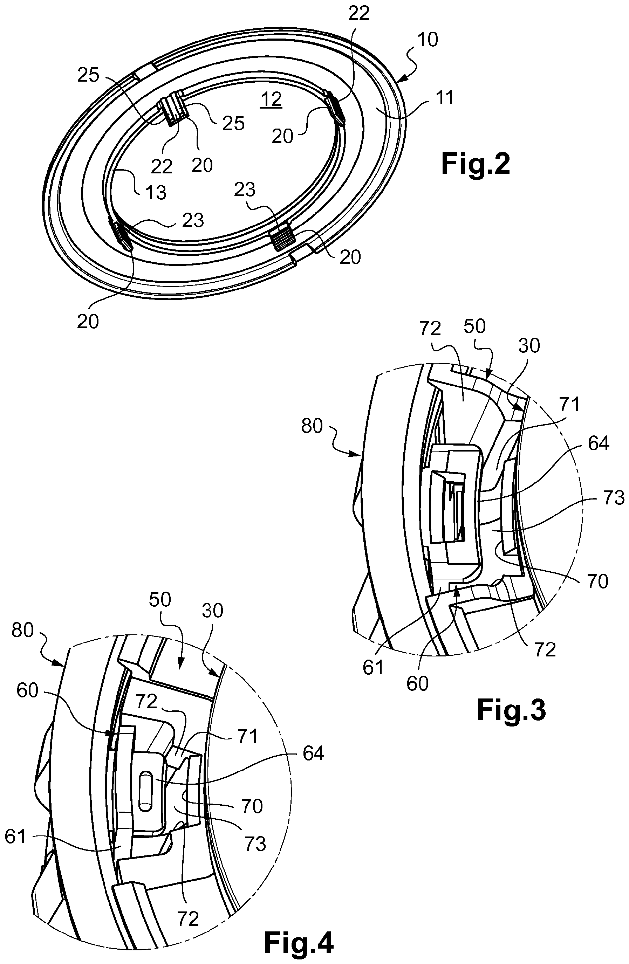

On a représenté sur les figures 3 et 4 deux de ces dégagements 71 (les deux autres dégagements étant respectivement identiques à ceux-ci).

Comme le montrent bien ces deux figures, chaque dégagement 71 s'étend sur toute la hauteur de la patte flexible 61 correspondante.

Chaque dégagement 71 est fermé à l'arrière par un fond et est ouvert à l'avant pour accueillir la languette 20 correspondante de la plaque d'habillage 11. Chaque dégagement 71 présente une face intérieure 73 (vers laquelle la patte d'encliquetage 60 fléchit lorsque le module d'appareillage 50 est engagé dans la boîte électrique 80), et deux faces latérales 72 qui bordent cette face intérieure 73.

Pour permettre aux pattes d'encliquetage 60 de s'accrocher à la boîte électrique 80, il est prévu quatre fenêtres rectangulaires 90 dans la paroi latérale 83 du corps 81 de la boîte électrique 80.

Comme le montrent les figures 1, 5 et 8, ces quatre fenêtres rectangulaires 90 présentent des formes identiques. Elles s'étendent en longueur le long du bord avant du corps 81. Elles présentent une hauteur suffisante pour permettre aux dents d'encliquetage 62 de s'y engager et de s'y accrocher. Comme le montre la figure 1, elles présentent une longueur L2 supérieure à la largeur L1 des dents d'encliquetage 62, de telle manière que lorsque le module d'appareillage 50 est engagé dans la boîte électrique 80, il conserve une mobilité de rotation autour de l'axe A1.

Ces fenêtres rectangulaires 90 sont ici chacune situées à l'avant de l'un des volets 85, si bien que les fonds de ces fenêtres rectangulaires 90 sont fermés par les revêtements 87.

Comme le montre la figure 1, pour bloquer la mobilité de rotation précitée du module d'appareillage 50 par rapport à la boîte électrique 80, deux des pattes d'encliquetage 60 opposées comportent au moins un cran de verrouillage 63. En l'espèce, les dents d'encliquetage 62 de ces deux pattes d'encliquetage 60 portent ici chacune, en saillie sur leurs bords d'extrémité, trois crans de verrouillage 63 triangulaires.

Comme cela sera expliqué plus en détail dans la suite de cet exposé, ces crans de verrouillage 63 sont adaptés à s'ancrer dans le revêtement 87 fermant le fond de la fenêtre rectangulaire 90 correspondante, à la faveur de l'engagement de la plaque d'habillage 10 sur le module d'appareillage 50, afin de bloquer ladite mobilité de rotation.

Comme le montre la figure 1, l'enjoliveur 30 est prévu pour être rapporté sur la paroi frontale 54 du socle 51 du module d'appareillage 50.

Il est plus précisément prévu pour se loger dans le renfoncement 56 prévu en creux dans la paroi frontale 54 du socle 51, et sur le bord de ce renfoncement 56.

Sa paroi frontale 31 présente ici une forme de plateau annulaire, qui délimite un puits 32 de réception d'une fiche électrique.

Le fond de ce puits 32 présente trois ouvertures, pour le passage des deux broches de la fiche électrique et pour le passage de la broche de terre du mécanisme de prise de courant 52.

Cet enjoliveur 30 comporte deux nervures d'encliquetage 40 diamétralement opposées, qui sont situées en saillie sur la face externe du puits 32, et qui sont adaptées à s'accrocher dans des fenêtres 57 prévues en correspondance dans la paroi latérale du renfoncement 56 du socle 51 du module d'appareillage 50.

La paroi frontale 31 de l'enjoliveur 30 est ici bordée extérieurement par un rebord tombant 33 qui est conçu pour s'appliquer contre la paroi frontale 54 du socle 51 du module d'appareillage 50.

Sur les figures 1 et 2, on a représenté en détail la plaque d'habillage 10 qui est prévue pour border cet enjoliveur 30.

Cette plaque d'habillage 10 présente donc une paroi frontale 11, ici en forme de plateau annulaire délimitant une ouverture centrale 12. En variante, elle pourrait bien entendu présenter une forme différente, par exemple une forme de cadre rectangulaire.

Tandis que la paroi frontale 11 de cette plaque d'habillage 10 est conçue pour recouvrir esthétiquement le module d'appareillage 50, l'ouverture centrale 12 est conçue pour laisser un accès à l'enjoliveur 30.

Le bord extérieur de cette paroi frontale 11 est légèrement recourbé vers l'arrière, si bien qu'il peut s'appliquer par l'arrière contre le panneau de plâtre 100 de la cloison creuse.

Le bord intérieur de cette paroi frontale 11 porte quant à lui un rebord 13 tombant vers l'arrière.

Chaque languette 20 précitée est alors prévue pour s'étendre à partir de ce rebord 13, vers l'arrière, parallèlement à l'axe A1.

En l'espèce, il est ici prévu quatre languettes 20 régulièrement réparties sur le pourtour de ce rebord 13.

Comme cela a été précisé supra, ces quatre languettes 20 sont respectivement prévues pour s'engager dans les dégagements 71, entre les pattes d'encliquetage 60 et les parties fixes du socle 51 du module d'appareillage 50.

Ces languettes 20 sont prévues pour assurer, d'une part, une fonction de fixation de la plaque d'habillage 10 au module d'appareillage 50, et, d'autre part, une fonction de verrouillage des pattes d'encliquetage 60 dans les fenêtres rectangulaires 90 de la boîte électrique 80.

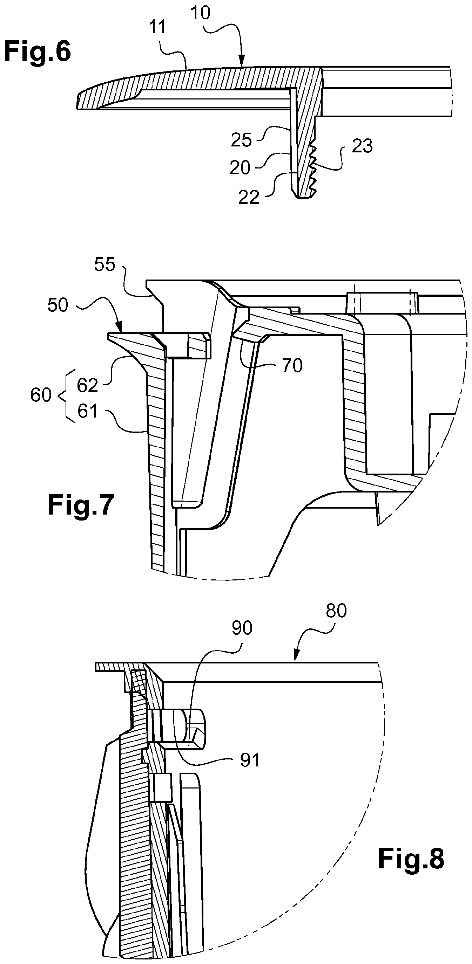

Comme le montrent plus particulièrement les figures 2 et 6, ces languettes 20 présentent des formes de plaquettes rectangulaires, avec une face extérieure 22 adaptée à venir au contact de la patte flexible 61 de la patte d'encliquetage 60 correspondante du module d'appareillage 50, et une face intérieure 23 adaptée à venir au contact de la partie rigide associée du socle 51 du module d'appareillage 50.

On pourrait prévoir que les deux faces des languettes soient sensiblement planes ou qu'elles présentent des nervures d'axes parallèles à l'axe A1, auquel cas ces languettes seraient prévues pour s'engager en force entre les pattes d'encliquetage et les parties rigides associées du socle du module d'appareillage.

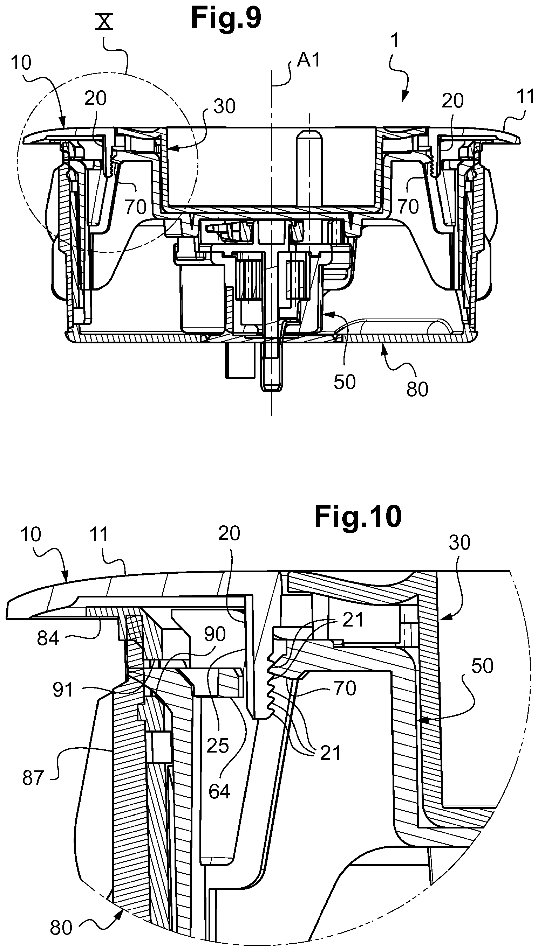

Ici, afin d'assurer une meilleure tenue de la plaque d'habillage 10 sur le module d'appareillage 50, il est prévu qu'au moins une des languettes 20 comporte au moins un cran 21 (voir figure 10) adapté à s'accrocher à un moins une nervure 70 prévue en correspondance sur le socle 51 du module d'appareillage 50.

En l'espèce, chaque languette 20 comporte une série de crans 21 étagés à des hauteurs différentes selon l'axe A1. Le socle 51 du module d'appareillage 50 ne comporte quant à lui qu'une unique nervure 70 à laquelle chacun des crans 21 peut s'accrocher. Il est ainsi possible de régler la hauteur de la plaque d'habillage 10 par rapport au module d'appareillage 50, notamment en fonction de l'épaisseur de l'enduit recouvrant le panneau de plâtre 100 dans lequel est encastrée la boîte électrique 80.

Ici, les crans 21 sont situés sur les faces intérieures 23 des languettes 20 et les nervures 70 sont prévues sur les parties rigides du socle 51.

En variante, on pourrait prévoir que les crans soient situés sur les faces extérieures des languettes et que les nervures soient prévues sur les pattes d'encliquetage du socle.

Ici, les nervures 70 sont profilées et elles s'étendent en longueur dans un plan orthogonal à l'axe A1. Le profil des nervures 70 apparaît plus particulièrement sur les figures 3, 4 et 7. Il est triangulaire. Chaque nervure 70 présente alors une face avant formant une rampe destinée à faciliter le passage des crans 21 de la languette 20, et une face arrière située dans un plan orthogonal à l'axe A1.

Ici, les crans 21 des languettes 20 sont également profilés et ils s'étendent en longueur dans des plans orthogonaux à l'axe A1. Le profil des crans 21 apparaît plus particulièrement sur la figure 6. Il présente une forme de triangle renversé par rapport au profil des nervures 70. Chaque cran 21 présente alors une face arrière formant une rampe destinée à faciliter son passage au-delà de la nervure 70 correspondante, et une face avant située dans un plan orthogonal à l'axe A1, de manière à assurer une bonne fixation de la plaque d'habillage 10 sur le module d'appareillage 50.

Pour bloquer le pivotement de la plaque d'habillage 10 par rapport au module d'appareillage 50, deux des dégagements 71 présentent des faces latérales 72 écartées l'une de l'autre d'une distance égale, au jeu de montage près, à la largeur des languettes 20 (voir figure 4). On dit alors de ces faces latérales 72 qu'elles forment des butées angulaires.

Ici, comme le montrent les figures 3 et 4, la patte flexible 61 de chaque patte d'encliquetage 60 porte, en saillie sur sa face intérieure, un épaulement 64 contre lequel la face extérieure de la languette 20 correspondante est adaptée à prendre appui. Ici, cet épaulement 64 se présente sous la forme d'une nervure (trouée sur la figure 3 et pleine dans la figure 4), s'étendant dans un plan orthogonal à l'axe A1.

En correspondance, comme le montrent les figures 2 et 10, la face extérieure de chaque languette 20 porte deux nervures de rigidification 25 d'axes parallèles à l'axe A1, qui sont adaptées à prendre appui contre ces épaulements 64 pour repousser les pattes d'encliquetage 60 vers l'extérieur.

C'est cette poussée qui va permettre aux crans de verrouillage 63 des deux pattes d'encliquetage 60 qui en sont équipées de venir s'ancrer au fond des fenêtres rectangulaires 90 de la boîte électrique 80, de manière à transpercer le revêtement 87 et à bloquer la rotation du module d'appareillage 50 dans la boîte électrique 80 autour de l'axe A1 (voir figures 9 et 10).

Ici, comme le montrent les figures 11 et 12, la boîte électrique 80 est livrée avec un étrier de connexion 200.

Cet étrier de connexion 200 comporte un socle 210, des éléments de connexion (non représentés sur la figure 11 et non visibles sur la figure 12), et des leviers de connexion 220.

Cet étrier de connexion 200 est prévu pour se placer à l'arrière du fond de la boîte électrique 80. Il présente alors une forme telle qu'il peut recouvrir la majeure partie du fond, de manière à former avec celui-ci un double-fond.

Le socle 210 comporte ici une paroi de fond 211 plane et globalement circulaire, qui est bordée à l'avant par un rebord périphérique 212 adapté à venir en appui contre la boîte électrique 80.

Comme le montre la figure 11, la paroi de fond 211 de ce socle 210 présente en face avant des cloisons 213 délimitant des logements d'accueil de trois éléments de connexion de phase, de neutre et de terre, pour la connexion de trois fils électriques issus d'une gaine de cheminement 300.

Comme le montre la figure 12, ces cloisons permettent ici le montage à basculement de trois leviers de connexion 220, lesquels permettent de forcer les fils électriques 301 à se connecter aux trois éléments de connexion de phase, de neutre et de terre.

Le socle 210 comporte également deux bras 214 diamétralement opposés, qui s'étendent à partir du rebord périphérique 212, vers l'avant, et dont les extrémités libres sont recourbées vers l'extérieur pour s'accrocher à la face avant du panneau de plâtre 100.

Le socle 210 délimite une ouverture d'entrée 215 qui est prévue pour être traversée par les fils électriques 301 et qui est située dans un méplat s'étendant à cheval sur la paroi de fond 211 et sur le rebord périphérique 212.

Ici, comme le montrent les figures 11 et 12, l'étrier de connexion 200 comporte un embout 250 conçu pour assurer le maintien de la gaine de cheminement 300 relativement au socle 210 et pour assurer une étanchéité entre ces deux éléments.

Cet embout 250 délimite ici, à une extrémité, deux passages 251 pour deux gaines de cheminement 300, et, à l'extrémité opposée, un conduit 252 à encliqueter dans l'ouverture d'entrée 215 prévue dans le socle 210.

Pour permettre à l'étrier de connexion 200 de s'emboîter sur la boîte électrique 80, comme le montre la figure 1, la paroi latérale de la boîte électrique 80 présente, en creux dans sa face extérieure, deux rainures 83A dont les dimensions sont ajustées à celles des bras 214, afin d'autoriser le passage de ces derniers.

On observe également sur la figure 1 que le trottoir extérieur 84 de la boîte électrique 80 est interrompu dans le prolongement de ces deux rainures 83A, pour permettre le passage des extrémités recourbées des bras 214.

L'installation de l'appareillage électrique 1 dans l'ouverture circulaire 101 pratiquée dans le panneau de plâtre 100 est alors réalisée de la manière suivante.

Après avoir connecté les éléments de connexion électrique de l'étrier de connexion 200 aux fils électriques 301 issus du réseau électrique local, et après avoir assemblé la gaine de cheminement 300 à l'étrier de connexion 200 via l'embout 250, l'installateur rapporte cet étrier de connexion dans l'ouverture circulaire 101 pratiquée dans le panneau de plâtre 100 (voir figure 12).

A ce stade, l'installateur doit régler approximativement l'orientation de l'étrier de connexion 200 dans l'ouverture circulaire 101. Il place pour cela les deux bras de cet étrier à la verticale l'un de l'autre.

Il rapporte ensuite la boîte électrique 80 dans l'ouverture circulaire 101 pratiquée dans le panneau de plâtre 100, en prenant soin que ses rainures 83A coulissent le long des bras 214 de l'étrier de connexion 200 et que son trottoir périphérique 84 s'applique bien contre le panneau de plâtre 100.

L'installateur rapporte alors directement le module d'appareillage 50 équipé de l'enjoliveur 30 dans la boîte électrique 80, en prenant soin, d'une part, que la face arrière de son trottoir extérieur 55 s'appuie contre la boîte électrique 80, et, d'autre part, que ses pattes d'encliquetage 60 s'accrochent bien aux bords avant 91 des fenêtres rectangulaires 90 prévues dans la paroi latérale 83 du corps 81 de la boîte électrique 80.

Lors de cet engagement, le socle 51 du module d'appareillage 50 vient appuyer contre les nervures 86 des volets 85 du corps 81 de la boîte électrique 80, ce qui permet de déployer ces volets 85 de telle sorte qu'ils s'accrochent à l'arrière du panneau de plâtre 100 et qu'ils bloquent bloquer la boîte électrique 80 dans l'ouverture circulaire 101.

Lors de cet engagement également, les bornes électriques du mécanisme de prise de courant 52 viennent se connecter aux éléments de connexion électrique de l'étrier de connexion 200, au travers d'une ouverture prévue dans le fond de la boîte électrique 80.

A la suite de cet engagement, les crans de verrouillage 63 des deux pattes d'encliquetage 60 qui en sont équipés s'appuient simplement contre les revêtements 87 prévues au fond des fenêtres rectangulaires 90, de telle manière que le module d'appareillage 50 reste libre de pivoter autour de l'axe A1 par rapport à la boîte électrique 80. L'installateur peut alors régler avec précision l'orientation du module d'appareillage 50 dans la boîte électrique 80.

Enfin, l'installateur achève l'installation de l'appareillage électrique 1 en rapportant la plaque d'habillage 10 sur la paroi frontale 54 du socle 51 du module d'appareillage 50.

Lors de cette ultime opération, les crans 21 des languettes 20 de la plaque d'habillage 10 viennent s'encliqueter sur les nervures 70 du socle 51 du module d'appareillage 50, jusqu'à ce que le bord extérieur de la paroi frontale 11 de la plaque d'habillage vienne s'appuyer contre la face avant du panneau de plâtre 100. Par son côté opposé aux crans, chaque languette 20 repousse la patte d'encliquetage 60 correspondante du module d'appareillage 50 vers l'extérieur, de telle manière que les crans de verrouillage 63 des deux pattes d'encliquetage 60 qui en sont équipées transpercent les revêtements 87 prévus au fond des deux fenêtres rectangulaires 90 correspondantes de la boîte électrique, ce qui bloque la rotation du module d'appareillage 50 dans la boîte électrique 80 autour de l'axe A1 (voir figures 9 et 10).

La présente invention n'est nullement limitée au mode de réalisation décrit et représenté, mais l'homme du métier saura y apporter toute variante conforme à son esprit.

Ainsi, on aurait pu prévoir d'utiliser une boîte électrique de forme différente, par exemple dont les fonds des fenêtres rectangulaires seraient chacun fermés par une paroi rigide crantée, dont les crans seraient adaptés à coopérer avec les crans de verrouillage des pattes d'encliquetage du module d'appareillage.

Selon une autre variante, on aurait pu prévoir que l'enjoliveur et la plaque d'habillage forme une seule et même pièce monobloc (formée par exemple par moulage d'une matière synthétique), auquel cas les languettes viendraient de formation avec cette seule pièce.

On aurait également pu prévoir d'utiliser un bloc électrique de forme différente, comportant par exemple un mécanisme d'appareillage équipé de deux pattes d'encliquetage adaptées à s'accrocher à l'arrière d'un support d'appareillage classique en forme de cadre (fixé par vis à la boîte électrique). Dans cette variante, la « partie de support » sera alors formée de la boîte électrique et du support d'appareillage. Les languettes prévues à l'arrière de la plaque d'habillage seront alors conçues pour s'engager entre le socle du mécanisme d'appareillage et les pattes d'encliquetage du mécanisme afin de verrouiller la fixation du mécanisme d'appareillage sur le support d'appareillage.

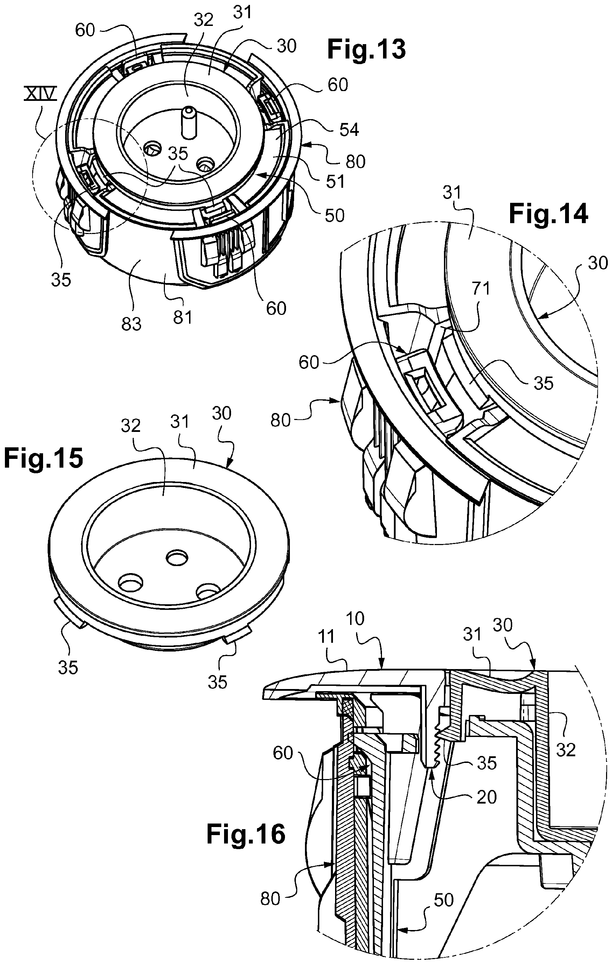

Sur les figures 13 à 16, on a représenté une variante de réalisation de l'appareillage électrique représenté sur les figures 1 à 12. Dans cette variante, les parties rigides solidaires du socle 51 du module d'appareillage 50 (celles contre lesquelles viennent s'adosser les languettes 20 de la plaque d'habillage 10) n'appartiennent pas au socle 51, mais elles sont rapportées sur le socle 51.

Le socle du module d'appareillage pourrait ainsi être équipé de quatre éléments identiques de petites tailles, qui comporteraient chacun des moyens de fixation sur le socle (par exemple par encliquetage) et une nervure d'accrochage pour les crans de la languette correspondante de la plaque d'habillage.

Dans la variante représentée sur les figures 13 à 16, les parties rigides viennent plutôt de formation avec l'enjoliveur 30.

Pour cela, comme le montre la figure 15, l'enjoliveur 30 se distingue de l'enjoliveur représenté sur la figure 1 en ce qu'il présente un diamètre légèrement supérieur à celui de l'enjoliveur de la figure 1 et en ce que son rebord tombant 33 est équipé de quatre nervures 35 qui forment lesdites parties rigides.

Ces nervures 35 sont ici situées à l'arrière du rebord tombant 33, en saillie vers l'extérieur, de manière que les crans 21 des languettes 20 de la plaque d'habillage 10 puissent s'y accrocher.

Dans cette variante, le socle 51 du module d'appareillage 50 se distingue du socle représenté sur la figure 1 en ce qu'il est dépourvu de nervure (70) et en ce que ses dégagements 71 présentent des dimensions légèrement supérieures.

Comme le montrent les figures 13 et 14, les nervures 35 de l'enjoliveur 30 peuvent alors se loger dans les quatre dégagements 71 prévus dans le socle 51 du module d'appareillage 50, en regard et à distance des pattes d'encliquetage 60 de ce module d'appareillage 50.

Ainsi, comme le montre la figure 16, les languettes 20 de la plaque d'habillage 10 pourront, d'un côté, s'accrocher aux nervures 35 de l'enjoliveur 30, et, de l'autre, repousser les pattes d'encliquetage 20 du module d'appareillage 30 vers l'extérieur.

## Revendications

1. Appareillage électrique (1) à installer sur une paroi, comportant :
- une partie de support (80) qui est adaptée à être fixée à la paroi et qui comprend au moins une boîte électrique,
- un bloc électrique (50) comprenant au moins un socle (51) qui loge un mécanisme électrique (52) et qui est équipé d'au moins une patte d'encliquetage (60) adaptée à être encliquetée sur ladite partie de support (80), et
- une partie avant (10, 30) comprenant au moins une paroi frontale (11) et au moins une languette (20) qui s'étend à l'arrière de ladite paroi frontale (11) et qui est adaptée à fixer ladite paroi frontale (11) audit bloc électrique (50),
**caractérisé en ce que** ladite languette (20) est adaptée à s'interposer entre ladite patte d'encliquetage (60) et une partie rigide solidaire du socle (51) du bloc électrique (50), ladite languette présentant une forme de plaquette, avec une première face adaptée à venir au contact de la patte d'encliquetage (60) et une seconde face adaptée à venir au contact de ladite partie rigide, **en ce que** ladite languette (20) comporte au moins un cran (21) et **en ce que** ledit socle (51) et/ou ladite partie rigide comporte au moins une nervure (35, 70) à laquelle ledit cran (21) est adapté à s'accrocher.

2. Appareillage électrique (1) selon la revendication 1, dans lequel ladite nervure (70) forme une saillie sur ladite partie rigide.

3. Appareillage électrique selon la revendication 1, dans lequel ladite nervure forme une saillie sur ladite patte d'encliquetage du bloc électrique.

4. Appareillage électrique (1) selon l'une des revendications précédentes, dans lequel il est prévu au moins deux crans (21) et/ou deux nervures (70), l'un à l'arrière de l'autre, qui sont adaptés à s'accrocher ensemble à au moins deux hauteurs différentes.

5. Appareillage électrique (1) selon l'une des revendications précédentes, dans lequel le socle (51) du bloc électrique (50) comporte deux butées angulaires (72) qui sont situées de part et d'autre de la languette (20) de la partie avant (10) pour bloquer en rotation la partie avant (10) par rapport au bloc électrique (50).

6. Appareillage électrique (1) selon la revendication précédente, dans lequel les butées angulaires (72) sont écartées l'une de l'autre d'une distance égale, au jeu de montage près, à la largeur de la languette (20).

7. Appareillage électrique (1) selon l'une des revendications précédentes, dans lequel la patte d'encliquetage (60) du bloc électrique (50) comporte une patte flexible (61), une dent d'encliquetage (62) adaptée à s'accrocher à une face de butée (91) de ladite boîte électrique (80), et au moins un cran de verrouillage (63) adapté à s'ancrer dans ladite boîte électrique (80) pour bloquer toute rotation du bloc électrique (50) par rapport à ladite boîte électrique (80) à la faveur de l'engagement de la partie avant (10) sur le bloc électrique (50).

8. Appareillage électrique (1) selon l'une des revendications précédentes, dans lequel ladite boîte électrique (80) comporte une paroi latérale (83) qui est fermée à l'arrière par une paroi de fond (82) et qui présente, en creux dans sa face intérieure, au moins une fenêtre (90) présentant un bord avant (91) auquel la patte d'encliquetage (60) du bloc électrique (50) peut s'accrocher.

9. Appareillage électrique (1) selon les deux revendications précédentes, dans lequel ledit cran de verrouillage (63) étant adapté à s'ancrer dans le fond de la fenêtre (90), ledit fond présente une surface crantée ou en matière souple.

10. Appareillage électrique selon l'une des revendications 1 à 6, dans lequel ladite partie de support comporte un support d'appareillage en forme de cadre, qui est équipé de moyens de fixation à la boîte électrique et qui présente une face de butée à laquelle la patte d'encliquetage du bloc électrique peut s'accrocher.

11. Appareillage électrique (1) selon l'une des revendications 1 à 10, dans lequel ladite partie rigide vient de formation avec le socle (51) du bloc électrique (50).

12. Appareillage électrique selon la revendication 11, dans lequel ladite partie avant comportant un enjoliveur qui est adapté à être rapporté à l'avant du bloc électrique et dont la forme définit la fonction du bloc électrique, et une plaque d'habillage qui est adaptée à être rapportée autour dudit enjoliveur, ladite languette est formée d'une seule pièce avec ledit enjoliveur.

13. Appareillage électrique (1) selon la revendication 11, dans lequel ladite partie avant comportant un enjoliveur (30) qui est adapté à être rapporté à l'avant du bloc électrique (50) et dont la forme définit la fonction du bloc électrique (50), et une plaque d'habillage (10) qui est adaptée à être rapportée autour dudit enjoliveur (30), ladite languette (20) est formée d'une seule pièce avec ladite plaque d'habillage (10).

14. Appareillage électrique (1) selon l'une des revendications 1 à 10, dans lequel ladite partie rigide appartient à un enjoliveur qui est adapté à être rapporté à l'avant du bloc électrique et dont la forme définit la fonction du bloc électrique, et dans lequel ladite partie avant est formée par une plaque d'habillage qui est adaptée à être rapportée autour dudit enjoliveur, ladite languette est formée d'une seule pièce avec ladite plaque d'habillage.

## Patentansprüche

1. Elektrische Vorrichtung (1), die auf einer Wand zu installieren ist, mit
- einem Sockelteil (80), der dazu ausgelegt ist, an der Wand befestigt zu werden, und der wenigstens eine Anschlußdose aufweist,
- einem Elektroblock (50), der wenigstens einen Sockel (51) aufweist, der einen Elektromechanismus (52) enthält und der mit wenigstens einem Einrastschenkel (60) ausgestattet ist, der dazu ausgelegt ist, an dem Sockelteil (80) eingerastet zu werden, und
- einem vorderen Teil (10, 30), der wenigstens eine Frontwandung (11) und wenigstens eine Zunge (20), die sich an der Rückseite der Frontwandung (11) erstreckt und die dazu ausgelegt ist, die Frontwandung (11) am Elektroblock 50) zu befestigen, aufweist,
**dadurch gekennzeichnet, daß** die Zunge (20) dazu ausgelegt ist, zwischen den Einrastschenkel (60) und einen mit dem Sockel (51) des Elektroblocks (50) fest verbundenen steifen Teil zu gelangen, wobei die Zunge eine Form einer Platte mit einer ersten Seite, die dazu ausgelegt ist, mit dem Einrastschenkel (60) in Kontakt zu kommen, und einer zweiten Seite, die dazu ausgelegt ist, mit dem steifen Teil in Kontakt zu kommen, hat, daß die Zunge (20) wenigstens eine Raste (21) aufweist und daß der Sockel (51) und/oder der steife Teil wenigstens eine Rippe (35, 70) aufweist, an der die Raste (21) einrastet.

2. Elektrische Vorrichtung (1) gemäß Anspruch 1, bei der die Rippe (70) auf dem steifen Teil eine Auskragung bildet.

3. Elektrische Vorrichtung (1) gemäß Anspruch 1, bei der die Rippe auf dem Einrastschenkel des Elektroblocks eine Auskragung bildet.

4. Elektrische Vorrichtung (1) gemäß einem der vorangehenden Ansprüche, bei der wenigstens zwei Rasten (21) und/oder zwei Rippen (70), die hintereinander liegen und die dazu ausgelegt sind, in wenigstens zwei verschiedenen Höhen miteinander einzurasten, vorgesehen sind.

5. Elektrische Vorrichtung (1) gemäß einem der vorangehenden Ansprüche, bei der der Sockel (51) des Elektroblocks (50) zwei abgewinkelte Anschläge (72) aufweist, die beiderseits der Zunge (20) des vorderen Teils (10) angeordnet sind, um ein Verdrehen des vorderen Teils (10) gegenüber dem Elektroblock (50) zu blockieren.

6. Elektrische Vorrichtung (1) gemäß dem vorangehenden Anspruch, bei der die abgewinkelten Anschläge (72) bis aufs Montagespiel in einem Abstand voneinander sind, der gleich der Breite der Zunge (20) ist.

7. Elektrische Vorrichtung (1) gemäß einem der vorangehenden Ansprüche, bei der der Einrastschenkel (60) des Elektroblocks (50) einen biegsamen Schenkel (61), einen für ein Einrasten an einer Anschlagseite (91) der Anschlußdose (80) ausgelegten Einrastzahn (62) und wenigstens einen Einrastzacken (63), der dazu ausgelegt ist, sich in der Anschlußdose (80) zu verankern, um zugunsten der Befestigung des vorderen Teils (10) am Elektroblock (50) jegliches Drehen des Elektroblocks (50) gegenüber der Anschlußdose (80) zu vermeiden, aufweist.

8. Elektrische Vorrichtung (1) gemäß einem der vorangehenden Ansprüche, bei der die Anschlußdose (80) eine Seitenwand (83) aufweist, die an der Rückseite durch eine Rückwand (82) geschlossen ist und die als Vertiefung auf ihrer Innenseite wenigstens ein Fenster (90) mit einem vorderen Rand (91) aufweist, an dem der Einrastschenkel (60) des Elektroblocks (50) einrasten kann.

9. Elektrische Vorrichtung (1) gemäß einem der vorangehenden Ansprüche, bei der, da der Einrastzacken (63) dazu ausgelegt ist, am Boden des Fensters (90) einzurasten, der Boden eine gezackte oder aus weichem Material bestehende Oberfläche aufweist.

10. Elektrische Vorrichtung (1) gemäß einem der Ansprüche 1 bis 6, bei der der Sockelteil einen Gerätesockel in Form eines Rahmens aufweist, der mit Mitteln zum Befestigen an der Anschlußdose versehen ist und der eine Anschlagseite aufweist, an der der Einrastschenkel des Elektroblocks einrasten kann.

11. Elektrische Vorrichtung (1) gemäß einem der Ansprüche 1 bis 10, bei der der steife Teil mit dem Sockel (51) des Elektroblocks (50) einstückig ausgebildet ist.

12. Elektrische Vorrichtung (1) gemäß Anspruch 11, bei der, während der vordere Teil eine Zierblende, die dazu ausgelegt ist, auf der Vorderseite des Elektroblocks angebracht zu werden, und deren Form die Funktion des Elektroblocks definiert, und eine Abdeckplatte, die dazu ausgelegt ist, um die Zierblende herum angebracht zu werden, aufweist, die Zunge mit der Zierblende einstückig ausgebildet ist.

13. Elektrische Vorrichtung (1) gemäß Anspruch 11, bei der, während der vordere Teil eine Zierblende (30), die dazu ausgelegt ist, auf der Vorderseite des Elektroblocks (50) angebracht zu werden, und deren Form die Funktion des Elektroblocks definiert, und eine Abdeckplatte (10), die dazu ausgelegt ist, um die Zierblende (30) herum angebracht zu werden, aufweist, die Zunge (20) mit der Abdeckplatte (10) einstückig ausgebildet ist.

14. Elektrische Vorrichtung (1) gemäß einem der Ansprüche 1 bis 10, bei der der steife Teil zu einer Zierblende gehört, die dazu ausgelegt ist, auf der Vorderseite des Elektroblocks angebracht zu werden, und deren Form die Funktion des Elektroblocks definiert, und bei der der vordere Teil durch eine Abdeckplatte gebildet ist, die dazu ausgelegt ist, um die Zierblende herum angebracht zu werden, wobei die Zunge mit der Abdeckplatte (10) einstückig ausgebildet ist.

## Claims

1. An electrical accessory (1) for installing on a wall, the electrical accessory comprising:
• a support portion (80) that is adapted to be fastened to the wall and that comprises at least one electrical box;
• an electrical unit (50) comprising at least one base (51) that houses an electrical mechanism (52) and that is provided with at least one snap-fastener tab (60) that is adapted to be snap-fastened on said support portion (80); and
• a front portion (10, 30) comprising at least one front wall (11) and at least one tongue (20) that extends at the rear of said front wall (11) and that is adapted to fasten said front wall (11) to said electrical unit (50);
the electrical accessory being **characterized in that** said tongue (20) is adapted to be interposed between said snap-fastener tab (60) and a rigid portion that is secured with the base (51) of the electrical unit (50), said tongue having a shape of a plate with a first face suitable to come into contact with said snap-fastener tab (60) and a second face suitable to come into contact with said rigid portion, and
**characterized in that** said tongue (20) includes at least one serration (21), and wherein said base (51) and/or said rigid portion includes at least one rib (35, 70) on which said serration (21) is adapted to catch.

2. An electrical accessory (1) according to claim 1, wherein said rib (70) forms a projection from said rigid portion.

3. An electrical accessory according to claim 1, wherein said rib forms a projection from said snap-fastener tab of the electrical unit.

4. An electrical accessory (1) according to any one of the preceding claims, wherein at least two serrations (21) and/or two ribs (70) are provided, one behind the other, that are adapted to catch together at at least two different depths.

5. An electrical accessory (1) according to any preceding claim, wherein the base (51) of the electrical unit (50) includes two angular abutments (72) that are situated on either side of the tongue (20) of the front portion (10), so as to prevent the front portion (10) from turning relative to the electrical unit (50).

6. An electrical accessory (1) according to the preceding claim, wherein the angular abutments (72) are spaced apart from each other by a distance that is equal to the width of the tongue (20), ignoring assembly clearance.

7. An electrical accessory (1) according to any preceding claim, wherein the snap-fastener tab (60) of the electrical unit (50) comprises a flexible tab (61), a snap-fastener tooth (62) that is adapted to catch on an abutment face (91) of said electrical box (80), and at least one locking serration (63) that is adapted to be anchored in said electrical box (80) as a result of the front portion (10) being engaged on the electrical unit (50), so as to prevent any turning of the electrical unit (50) relative to said electrical box (80).

8. An electrical accessory (1) according to any preceding claim, wherein said electrical box (80) comprises a side wall (83) that is closed at the rear by a rear wall (82), and that presents at least one slot (90) set back in its inside face and presenting a front edge (91) on which the snap-fastener tab (60) of the electrical unit (50) can catch.

9. An electrical accessory (1) according to the two preceding claims, wherein said locking serration (63) is adapted to be anchored in the bottom wall of the slot (90), and said bottom wall presents a surface that is serrated or that is made of flexible material.

10. An electrical accessory according to any one of claims 1 to 6, wherein said support portion comprises an accessory support in the form of a frame, that is provided with fastener means for fastening to the electrical box, and that presents an abutment face on which the snap-fastener tab of the electrical unit can catch.

11. An electrical accessory (1) according to any one of claims 1 to 10, wherein said rigid portion is formed integrally with the base (51) of the electrical unit (50) .

12. An electrical accessory according to claim 11, wherein said front portion comprises both a trim plate that is adapted to the fitted to the front of the electrical unit and that has a shape defining the function of the electrical unit, and also a cover plate that is adapted to be fitted around said trim plate, and said tongue is formed integrally with said trim plate.

13. An electrical accessory (1) according to claim 11, wherein said front portion comprises both a trim plate (30) that is adapted to be fitted to the front of the electrical unit (50) and that has a shape defining the function of the electrical unit (50), and also a cover plate (10) that is adapted to be fitted around said trim plate (30), and said tongue (20) is formed integrally with said cover plate (10).

14. An electrical accessory (1) according to any one of claims 1 to 10, wherein said rigid portion forms part of a trim plate that is adapted to be fitted to the front of the electrical unit and that has a shape defining the function of the electrical unit, and wherein said front portion is formed by a cover plate that is adapted to be fitted around said trim plate, and said tongue is formed integrally with said cover plate.
